(19) Europäisches Patentamt
European Patent Office
Office européen des brevets

(11) **EP 3 653 551 B1**

(12) **EUROPÄISCHE PATENTSCHRIFT**

(45) Veröffentlichungstag und Bekanntmachung des Hinweises auf die Patenterteilung:
**04.03.2026   Patentblatt 2026/10**

(21) Anmeldenummer: **18206626.6**

(22) Anmeldetag: **16.11.2018**

(51) Internationale Patentklassifikation (IPC):
***B65G 54/02*** *(2006.01)*

(52) Gemeinsame Patentklassifikation (CPC):
**B65G 54/02**

(54) **LINEARMOTORSYSTEM**

LINEAR MOTOR SYSTEM

SYSTÈME DE MOTEUR LINÉAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2020   Patentblatt 2020/21**

(73) Patentinhaber: **Schneider Electric Industries SAS 92500 Rueil Malmaison (FR)**

(72) Erfinder: **Rothaug, Andreas 97839 Esselbach (DE)**

(74) Vertreter: **Manitz Finsterwald Patent- und Rechtsanwaltspartnerschaft mbB Martin-Greif-Straße 1 80336 München (DE)**

(56) Entgegenhaltungen:
| | |
|---|---|
| EP-A1- 1 892 204 | EP-A1- 2 998 232 |
| EP-B1- 2 210 701 | DE-A1- 102013 202 674 |
| FR-A1- 2 792 608 | JP-A- H03 111 334 |
| JP-A- S63 154 462 | US-A- 5 154 380 |

## Beschreibung

Die vorliegende Erfindung betrifft ein Transportsystem, das als Linearmotorsystem ausgebildet ist, und ein Verfahren zum Befestigen eines Gegenstands an einem Transportelement eines Transportsystems.

Transportsysteme wie beispielsweise Linearmotorsysteme, die insbesondere als Multi-Carrier-Systeme ausgebildet sein können, umfassen üblicherweise mehrere Transportelemente, welche mittels mehrerer, entlang einer Führungsbahn angeordneter Linearmotoren bewegt werden. Während einer Bewegung durch die Linearmotoren liegen die Transportelemente auf der Führungsbahn des Linearmotors auf. Die Transportelemente sind dabei einzeln und unabhängig voneinander bewegbar, so dass Multi-Carrier-Systeme die Möglichkeit schaffen, flexibel an verschiedene industrielle Prozesse angepasst zu werden, und insbesondere auch auf Veränderungen in einem industriellen Prozess flexibel reagieren können.

Auf einen zu transportierenden Gegenstand, der sich an oder auf einem Transportelement eines solchen Transportsystems befindet, wirken während der Bewegung des Transportelements unterschiedliche Kräfte, beispielsweise Kräfte aufgrund einer Beschleunigung oder Verlangsamung des Transportelements und Zentrifugalkräfte bei einer Kurvenfahrt. Damit der zu transportierende Gegenstand während der Bewegung des Transportelements nicht von diesem getrennt wird und beispielsweise vom Transportelement oder dem gesamten Transportsystem herunterfällt, ist es notwendig, den zu transportierenden Gegenstand an dem Transportelement zu befestigen.

Zur Befestigung eines Gegenstands an einem Transportelement werden bisher meistens mechanische Befestigungen verwendet, beispielsweise mittels Klammern. Auch ist es bekannt, beispielsweise eine Vakuumleitung temporär mit dem Transportelement zu koppeln, wobei mit dem so an das Transportelement übertragenen Unterdruck eine Haltekraft erzeugt wird. Das Koppeln der Vakuumleitung ist jedoch aufwändig und unflexibel. Alternativ werden Befestigungselemente verwendet, bei denen elektrische Energie auf das Transportelement übertragen wird, insbesondere mittels eines gleitenden elektrischen Kontakts zwischen dem Transportelement und den feststehenden Linearmotoren oder Führungen. Der gleitende Kontakt ist jedoch z.B. Verschleiß und Abnutzung ausgesetzt.

Aus der DE 10 2013 202 674 A1 sind ein Linearmotorsystem und ein Verfahren mit den Merkmalen gemäß dem Oberbegriff der Ansprüche 1 und 2 bekannt.

Die JP S63 154462 A beschreibt ein ähnliches Transportsystem und ein ähnliches Verfahren, bei denen ein Betätigungselement jedoch nicht durch eine Bewegung des Transportelements betätigt werden kann.

In der EP 1 892 204 A1 ist ein Transportsystem beschrieben, das zum Transportieren, Ablegen und Stapeln von Fördergut vorgesehen ist. Das Transportsystem weist einen umlaufenden Fördergurt auf, der in Förderrichtung hintereinander liegende und im gegenseitigen Abstand zueinander angeordnete Saugblöcke aufweist, die einen mit einem Gehäuse verbundenen Saugnapf umfassen, der sich an das Fördergut saugend anlegt, dieses aufnimmt, transportiert und ablegt. An einem Gehäuse des jeweiligen Saugblocks ist eine hubgesteuerte Unterdruckpumpe angeordnet. Anstelle des Fördergurts können Längsförderer verwendet werden.

Eine Aufgabe der Erfindung besteht darin, ein Transportsystem und ein Verfahren zu schaffen, bei bzw. mit denen ein zu transportierender Gegenstand auf einfache, zuverlässige und kostengünstige Weise an dem Transportelement befestigt werden kann.

Diese Aufgabe wird durch ein Linearmotorsystem und ein Verfahren mit den Merkmalen der unabhängigen Ansprüche gelöst. Das Linearmotorsystem ist zum Transportieren eines Gegenstands vorgesehen und weist ein erstes Transportelement auf, das als ein Läufer des Linearmotorsystems ausgebildet ist. Das erste Transportelement umfasst erfindungsgemäß ein erstes Betätigungselement und ein Energiespeicherelement, das mit dem ersten Betätigungselement gekoppelt ist. Das Energiespeicherelement ist ausgebildet, um bei Betätigung des ersten Betätigungselements Energie zu speichern. Ferner ist das erste Transportelement ausgebildet, um mittels der gespeicherten Energie des Energiespeicherelements eine Haltekraft auf den zu transportierenden Gegenstand auszuüben oder aufzubauen.

Die Erfindung setzt auf der Erkenntnis auf, dass es durch das Betätigungselement möglich ist, eine Bewegung des Transportelements und/oder eines anderen Teils des Linearmotorsystem zu nutzen, um das Energiespeicherelement mit Energie aufzuladen. Die gespeicherte Energie kann dann wiederum verwendet werden, um den zu transportierenden Gegenstand am Transportelement zu befestigen, indem mittels der gespeicherten Energie die Haltekraft aufgebaut und/oder aufrechterhalten wird.

Erfindungsgemäß wird daher keine direkte Energiezufuhr, z.B. von elektrischer Energie, von extern (beispielsweise von der Führungsbahn oder allgemein von anderen Teilen des Linearmotorsystem) benötigt, um die Haltekraft aufzubauen oder auszuüben. Es kann somit auf elektrische Leitungen und/oder Vakuumleitungen verzichtet werden, welche zeitweise mit dem Transportelement verbunden werden, um die Haltekraft auszuüben oder aufzubauen. Stattdessen wird bevorzugt die inhärente Funktion des Transportelements, nämlich dessen Möglichkeit zur Bewegung entlang der Führungsbahn, verwendet, um das Betätigungselement zu betätigen und auf diese Weise Energie an das Energiespeicherelement zu transferieren. Mittels dieser Energie wird schließlich die Haltekraft ausgeübt oder aufgebaut.

Wie später ausgeführt, ist es beispielsweise möglich, das erste Transportelement selbst oder ein anderes Transportelement mittels des Linearmotorsystems so zu bewegen, dass durch die Bewegung des Transportelements das Betätigungselement betätigt wird. Ganz allgemein gesprochen, kann eine Bewegung des ersten Transportelements oder eine relative Bewegung des ersten Transportelements (z.B. zu dem später genannten Aktivierungselement) zu einer Betätigung des Betätigungselements führen. Auf diese Weise wird durch eine Bewegung eine Aufladung des Energiespeicherelements bewirkt, wobei die Aufladung durch die Betätigung des Betätigungselements erfolgt. Während oder nach der Betätigung des Betätigungselements wird dann die Haltekraft ausgeübt oder aufgebaut. Das Betätigungselement selbst kommt bevorzugt mit dem zu transportierenden Gegenstand nicht in mechanischen Kontakt.

Erfindungsgemäß müssen an dem Linearmotorsystem selbst nur sehr wenige Veränderungen vorgenommen werden, um die Möglichkeit der Erzielung der Haltekraft durch Betätigung des Betätigungselements zu schaffen. Auf diese Weise wird eine einfache, zuverlässige und aufgrund der geringen nötigen Veränderungen auch kostengünstige Möglichkeit der Befestigung von zu transportierenden Gegenständen geschaffen.

Aufgrund der Energieübertragung zwischen Betätigungselement und Energiespeicherelement, die zur Erzeugung der Haltekraft für den zu transportierenden Gegenstand führt, bildet das Transportelement ferner eine "autarke Einheit" mit interner Befestigungsfunktion für den Gegenstand.

Das Linearmotorsystem umfasst außerdem zumindest ein Aktivierungselement, das ausgebildet ist, um eine Betätigung des ersten Betätigungselements auszulösen. Das erste Betätigungselement ist durch die Bewegung des ersten Transportelements betätigbar.

Ferner ist das Aktivierungselement bezogen auf die Bewegungsrichtung des ersten Transportelements seitlich, d.h. entlang einer Senkrechten zur Bewegungsrichtung beabstandet, angeordnet. Seitlich bedeutet, dass das Transportelement entlang der Führungsbahn an dem Aktivierungselement vorbeibewegt werden kann, ohne dass die Bewegung des Transportelements durch das Aktivierungselement behindert wird.

Ein Aktivierungselement kann zusätzlich insbesondere in einer Bewegungsrichtung des ersten Transportelements angeordnet oder anordenbar sein. Das Aktivierungselement kann beispielsweise eine stationäre Platte umfassen, gegen welche das Betätigungselement drücken kann. Insbesondere kann das erste Transportelement so bewegt werden, dass das Betätigungselement an die Platte angedrückt wird, wodurch dann die Betätigung des Betätigungselements aufgrund der Eigenbewegung des ersten Transportelements erfolgt. Zusätzlich kann das Aktivierungselement wahlweise in der Bewegungsrichtung des Transportelements angeordnet werden. So könnte die genannte Platte beispielsweise nach Art einer Schranke dann in der Bewegungsrichtung angeordnet werden, wenn die Betätigung des Betätigungselements gewünscht ist.

Bei dem "seitlichen" Aktivierungselement kann es sich beispielsweise um einen abgerundeten Nocken handeln, welcher sich in einer Richtung senkrecht zur Bewegungsrichtung erstreckt. Der Nocken kann so ausgebildet sein, dass er bei einem sich vorbeibewegenden Transportelement das Betätigungselement zumindest kurzzeitig betätigt.

Erfindungsgemäß erstreckt sich ein Stößel oder allgemein das Betätigungselement senkrecht zur Bewegungsrichtung von dem Transportelement weg. Nähert sich nun das Transportelement dem seitlichen Aktivierungselement, so können der Stößel und das Aktivierungselement aufeinander treffen und aufeinander eine Kraft ausüben und den Stößel so von dem ausgefahrenen Zustand in den zurückgezogenen Zustand bewegen. Befindet der Stößel vollständig im zurückgezogenen Zustand, so kann das Transportelement z.B. kurz seine Bewegung stoppen, um mit dem zu transportierenden Gegenstand beladen zu werden. Danach kann das Transportelement weiter entlang der Führungsbahn bewegt werden, wodurch der Stößel und das Aktivierungselement voneinander getrennt werden. Hierbei wird der Stößel dann durch das Energiespeicherelement zurück in den ausgefahrenen Zustand gebracht, wobei gleichzeitig der Unterdruck zur Befestigung des Gegenstands erzeugt wird.

Gemäß einem nicht beanspruchten Beispiel speichert das Energiespeicherelement Energie, die bei Betätigung des Betätigungselements erzeugt wird, und es gibt die gespeicherte Energie zur Erzeugung der Haltekraft zumindest zum Teil wieder ab. Dabei ist das Energiespeicherelement insbesondere als ein Rückstellelement für das Betätigungselement ausgebildet.

Das Energiespeicherelement kann somit zwischen einem Zustand geringerer potentieller Energie in einen Zustand höherer potentieller Energie wechseln, wenn das Betätigungselement betätigt wird. Anschließend, d.h. insbesondere nach Beendigung der Betätigung des Betätigungselements, wechselt das Energiespeicherelement wieder in den Zustand geringerer potentieller Energie, wobei die Energie, die das Energiespeicherelement dabei abgibt, sowohl zur Erzeugung der Haltekraft für den zu transportierenden Gegenstand als auch zum Zurückstellen des Betätigungselements verwendet werden kann. Das Energiespeicherelement kann beispielsweise eine Feder oder ein anderes elastisches Element sein, mit der das erste Betätigungselement nach dessen Betätigung wieder zurückgestellt wird.

Insbesondere erfolgt die Speicherung der Energie im Energiespeicherelement zumindest kurzzeitig, beispielsweise für eine vorbestimmte Zeitdauer. Bevorzugt wird die Energie erst wieder abgegeben, während oder nachdem die Betätigung des Betätigungselements beendet wird.

Gemäß einem weiteren Beispiel ist das erste Betätigungselement ausgebildet, um mechanisch zumindest zwischen einem ersten und einem zweiten Zustand bewegt zu werden. Das erste Betätigungselement kann dabei einen Stößel am Transportelement umfassen, und es kann ausgebildet sein, um zwischen einem ausgefahrenen Zustand und einem zurückgezogenen oder hineingedrückten Zustand bewegt zu werden. Dieses Beispiel gestattet eine besonders kostengünstige Ausbildung des Transportelements. Während sich das erste Betätigungselement in dem ersten bzw. ausgefahrenen Zustand befindet, befindet sich das Energiespeicherelement bevorzugt in dem Zustand geringerer potentieller Energie, während sich das Energiespeicherelement bevorzugt in dem Zustand höherer potentieller Energie befindet, wenn sich das erste Betätigungselement in dem zweiten bzw. zurückgezogenen Zustand befindet.

Gemäß einem weiteren Beispiel kann das erste Betätigungselement ein elektromagnetisches Element umfassen, wie etwa eine Spule, in deren Nähe bei Betätigung ein Magnet bewegt wird, um dadurch elektrische Energie zu erzeugen, die beispielsweise in einem Kondensator oder einer Batterie des Transportelements gespeichert wird, die bei diesem Beispiel als Energiespeicherelement dient. Die Haltekraft für den zu transportierenden Gegenstand kann bei diesem Beispiel durch ein weiteres elektromagnetisches Element erzeugt werden, beispielsweise durch einen Elektromagneten oder einen Elektromotor, welcher mittels des Kondensators oder der Batterie aktiviert wird. Das weitere elektromagnetische Element kann beispielsweise eine Verriegelung des zu transportierenden Gegenstands bewirken, wodurch eine Haltekraft ausgeübt werden kann.

Weiterhin könnte das Betätigungselement auch ein Piezoelement, z.B. eine Piezokeramik aufweisen. Durch eine Relativbewegung des Transportelements kann eine Kraft auf das Piezoelement ausgeübt werden, wobei mittels des Piezoelements eine Spannung und ein Strom erzeugt werden, die ebenfalls in einem Kondensator oder einer Batterie gespeichert werden können.

Gemäß einem weiteren Beispiel weist das erste Transportelement einen Hohlraum auf, in welchem das Energiespeicherelement einen Unterdruck bezogen auf einen Außenraum (Umgebung) des ersten Transportelements erzeugt, wenn das Energiespeicherelement seine gespeicherte Energie zumindest zum Teil wieder abgibt. Mittels des Unterdrucks kann das erste Transportelement die Haltekraft auf den zu transportierenden Gegenstand ausüben. Zu diesem Zweck kann der Hohlraum einen (Unterdruck)-Kanal umfassen, welcher bis zu dem Gegenstand verläuft, wobei mittels des Kanals zwischen Gegenstand und Transportelement ein Unterdruck erzeugt wird. Der Gegenstand kann dementsprechend auf einer Auslassöffnung des Kanals aufliegen. Der Kanal kann auch dazu dienen, bei nicht aufliegendem Gegenstand einen Druckausgleich mit der Umgebung herzustellen. Der Kanal kann bevorzugt die einzige Verbindung des Hohlraums mit der Umgebungsluft sein. Der Gegenstand wird bei diesem Beispiel somit aufgrund des Unterdrucks beispielsweise an einer Außenseite des ersten Transportelements angesaugt und dadurch fixiert. Es sind daher keine weiteren Befestigungselemente an dem ersten Transportelement erforderlich, um den Gegenstand an diesem zu fixieren.

Wenn das erste Betätigungselement beispielsweise als ein Stößel ausgebildet ist, der bei einer Betätigung eine Feder als Energiespeicherelement spannt oder komprimiert, bewirkt das Zurückstellen des Stößels mittels der Feder bei diesem Beispiel eine Vergrößerung des Hohlraums im Inneren des ersten Transportelements.

Zu diesem Zweck kann das Betätigungselement zumindest abschnittsweise auch als Kolben ausgebildet sein oder zumindest wirkmechanisch mit einem Kolben gekoppelt sein. Der Kolben kann in dem Hohlraum laufen, welcher bevorzugt als Zylinder ausgebildet ist. Die hierin beschriebene Vergrößerung oder Verkleinerung des Hohlraums meint dann das effektive Volumen, welches gerade von dem Kolben freigegeben ist, bzw. den in den Figuren beschriebenen Arbeitsraum.

Genauer gesagt, kann der Stößel beim Betätigen zunächst in den zurückgezogenen Zustand bewegt werden. Dies hat zwei Folgen. Zum einen wird der Hohlraum verkleinert, da der Kolbenteil des Stößels Luft verdrängt, wodurch Luft aus dem Hohlraum durch den Kanal an die Umgebung abgegeben wird. Zum anderen wird die Feder komprimiert und damit gespannt, d.h. das Energiespeicherelement speichert Energie. Beispielsweise in diesem Zustand kann nun der Gegenstand im Bereich des Kanals auf das Transportelement aufgelegt werden, wodurch der Hohlraum mittels des zu transportierenden Gegenstands von der Umgebungsluft des ersten Transportelements getrennt wird. Wird der Stößel nun nicht mehr aktiv betätigt bzw. in dem zurückgezogenen Zustand gehalten, so entspannt sich die Feder, wodurch der Stößel in den ausgefahrenen Zustand bewegt wird. Zusammen mit dieser Bewegung erfolgt eine Bewegung des Kolbenteils des Stößels, die wiederum eine Vergrößerung des Hohlraums und damit eine Verringerung des Drucks der Luft bewirkt, die in dem Hohlraum eingeschlossen ist. Ein Druckausgleich ist in diesem Zustand aufgrund des durch den Gegenstand blockierten Kanals nicht möglich. Durch diese Druckverringerung wird der zu transportierende Gegenstand an der Außenseite des ersten Transportelements angesaugt.

Gemäß einem weiteren Beispiel umfasst das Linearmotorsystem zusätzlich ein Freigabeelement für den zu transportierenden Gegenstand, das die auf den zu transportierenden Gegenstand wirkende Haltekraft löst. Bei diesem Beispiel, bei dem ein Unterdruck in einem Hohlraum des Transportelements die Haltekraft für den zu transportierenden Gegenstand erzeugt, kann das Freigabeelement ausgebildet sein, um den Unterdruck in dem Hohlraum des ersten Transportelements aufzuheben, beispielsweise mittels einer Belüftungsleitung. Mit anderen Worten dient das Freigabeelement in diesem Fall zur Belüftung des Hohlraums im Inneren des ersten Transportelements. Alternativ oder zusätzlich kann das Betätigungselement zugleich auch das Freigabeelement sein. Sofern bereits ein Unterdruck besteht, welcher den zu transportierenden Gegenstand befestigt, kann der Unterdruck durch nochmaliges Betätigen des Betätigungselements aufgehoben werden. Wenn also beispielsweise der Stößel zur Freigabe des Gegenstands gedrückt wird, d.h. die Feder wieder komprimiert wird, besteht währenddessen kein Unterdruck, sodass der zu transportierende Gegenstand dann leicht vom Transportelement abgenommen werden kann.

Das Aktivierungselement ist gemäß einem weiteren Beispiel dort angeordnet, wo ein Befestigen und/oder Loslösen des zu transportierenden Gegenstands von dem Transportelement gewünscht ist, beispielsweise an einer Be- oder Entladestation des Linearmotorsystem. Es ist auch möglich, mehrere verschiedene Aktivierungselemente zugleich bei dem Linearmotorsystem vorzusehen.

Das System umfasst gemäß einem weiteren Beispiel zumindest ein zweites Transportelement, welches das Aktivierungselement bildet. Das erste Betätigungselement des ersten Transportelements wird somit mittels des zweiten Transportelements betätigt, beispielsweise dadurch, dass das erste Transportelement, z.B. von dem Linearmotor, gegen das zweite Transportelement bewegt wird.

Insgesamt gestattet das Linearmotorsystem somit eine einfache und flexible Auslösung für die Betätigung des ersten Betätigungselements. Diese Betätigung und die damit verbundene Erzeugung der Haltekraft für den Gegenstand kann somit durch die im Linearmotorsystem vorhandenen Transportelemente oder ein zusätzliches feststehendes Element (Aktivierungselement) bewirkt werden, ohne dass eine zusätzliche Steuerung zur Fixierung des Gegenstands am ersten Transportelement erforderlich ist.

Gemäß einem weiteren Beispiel können das erste Betätigungselement und das Energiespeicherelement beide, insbesondere gemeinsam, durch eine flexible Außenfläche des ersten Transportelements gebildet sein. Die flexible Außenfläche umschließt dabei ein komprimierbares Luftvolumen, das durch eine Wechselwirkung mit einem Aktivierungselement, beispielsweise einem zweiten Transportelement, komprimiert werden kann. Diese Kompression kann wiederum zu einem Austreten von Luft aus einem Hohlraum in dem ersten Transportelement und zu einer Erzeugung eines Unterdrucks in diesem führen, sobald die flexible Außenfläche wieder in einen entspannten Zustand übergeht und der Hohlraum gegenüber der Umgebung des ersten Transportelements verschlossen ist, beispielsweise durch den Gegenstand. Durch den Unterdruck wird eine Haltekraft auf den zu transportierenden Gegenstand ausgeübt.

Das erste Transportelement weist gemäß einem weiteren Beispiel ein zweites Betätigungselement auf, mit dem das Energiespeicherelement ebenfalls gekoppelt ist. Ferner ist das Energiespeicherelement vorzugsweise ausgebildet, um bei Betätigung des ersten und/oder zweiten Betätigungselements Energie zu speichern. Das zweite Betätigungselement kann auch mit einem separaten, zweiten Energiespeicherelement gekoppelt sein, sodass ein doppelter, insbesondere symmetrischer Aufbau aus zwei Betätigungselementen und zugeordneten Energiespeicherelementen vorliegt. Das zweite Betätigungselement gestattet einen flexiblen Einsatz des ersten Transportelements, da sozusagen eine zweite Möglichkeit zur Erzeugung der Haltekraft vorgesehen ist. Das zweite Betätigungselement kann beispielsweise entgegengesetzt zum ersten Betätigungselement am ersten Transportelement angebracht sein (z.B. vorne und hinten in Bewegungsrichtung). Dadurch kann es möglich sein, das Energiespeicherelement unabhängig von der Bewegungsrichtung des ersten Transportelements zu aktivieren. Ein zusätzliches (drittes) seitliches Betätigungselement kann zur Betätigung mittels eines seitlichen Aktivierungselements vorgesehen sein.

Das hierin beschriebene Linearmotorsystem umfasst bevorzugt mehrere Transportelemente, welche mittels mehrerer, entlang einer Führungsbahn angeordneter Linearmotoren bewegt werden. Hierzu umfassen die Transportelemente jeweils zumindest einen Magneten, z.B. einen Permanentmagneten, welcher von einem Magnetfeld des jeweiligen Linearmotors mit einer Kraft beaufschlagt werden kann. Während einer Bewegung durch die Linearmotoren liegen die Transportelemente auf der Führungsbahn auf oder werden mit drehbaren Rollen auf der Führungsbahn geführt. Die Transportelemente sind bevorzugt einzeln und unabhängig voneinander bewegbar, so dass das Linearmotorsystem flexibel an verschiedene industrielle Prozesse angepasst werden kann.

Weiterer Gegenstand der Erfindung ist ein Verfahren zum Befestigen eines Gegenstands an einem ersten Transportelement eines Linearmotorsystems, wie es beispielsweise vorstehend beschrieben ist. Gemäß dem Verfahren wird zunächst ein erstes Betätigungselement des ersten Transportelements derart betätigt, dass ein Energiespeicherelement des Transportelements Energie speichert. Anschließend wird der zu transportierende Gegenstand an dem ersten Transportelement angeordnet. Schließlich wird mittels der Energie des Energiespeicherelements eine Haltekraft auf den zu transportierenden Gegenstand ausgeübt oder aufgebaut.

Die hierin zu dem Linearmotorsystem getroffenen Aussagen gelten entsprechend auch für das erfindungsgemäße Verfahren. Dies gilt insbesondere bezüglich der Vorteile und der bevorzugten Ausführungsformen.

Gemäß einem nicht beanspruchten Beispiel wird darüber hinaus das erste Betätigungselement mittels eines Aktivierungselements, das insbesondere als ein zweites Transportelement ausgebildet ist, betätigt. Ferner wird die Haltekraft dann auf den zu transportierenden Gegenstand ausgeübt oder aufgebaut, wenn ein Abstand zwischen dem Aktivierungselement und dem ersten Transportelement vergrößert wird.

Die Vergrößerung des Abstands zwischen dem Aktivierungselement und dem ersten Transportelement kann beispielsweise bewirken, dass das erste Betätigungselement des ersten Transportelements von einem zweiten bzw. zurückgezogenen Zustand wieder in einen ersten bzw. ausgefahrenen Zustand zurückgestellt wird und dadurch ein Hohlraum innerhalb des ersten Transportelements vergrößert und ein Unterdruck bezogen auf den Außenraum des ersten Transportelements erzeugt wird. Wenn sich das erste Transportelement von dem Aktivierungselement wegbewegt und dadurch der Abstand zwischen diesen vergrößert wird, wird somit durch die Überleitung des ersten Betätigungselements zurück in den ersten Zustand ein Unterdruck innerhalb des ersten Transportelements erzeugt. Mittels des Unterdrucks wird wiederum die Haltekraft auf den zu transportierenden Gegenstand ausgeübt oder aufgebaut. Zur Erzeugung des Unterdrucks und der Haltekraft für den Gegenstand ist somit bei diesem Beispiel lediglich eine relative Bewegung zweier Transportelemente notwendig, durch welche das erste Betätigungselement zwischen zwei Zuständen übergeht und das Energiespeicherelement Energie speichert, mit der anschließend die Haltekraft ausgeübt oder aufgebaut wird.

Ein Transportsystem nicht gemäss der Erfindung wird nachstehend rein beispielhaft unter Bezugnahme auf die Zeichnungen beschrieben. Es zeigen:

Fig. 1          eine perspektivische Ansicht des Transportsystems;

Fig. 2          eine Detailansicht verschiedener Elemente des Transportsystems von Fig. 1;

Fig. 3 bis 8    eine schematische Darstellung zweier Transportelemente und der Schritte eines Verfahrens zum Befestigen eines Gegenstands an einem Transportelement; und

Fig. 9          eine schematische Darstellung zweier Transportelemente.

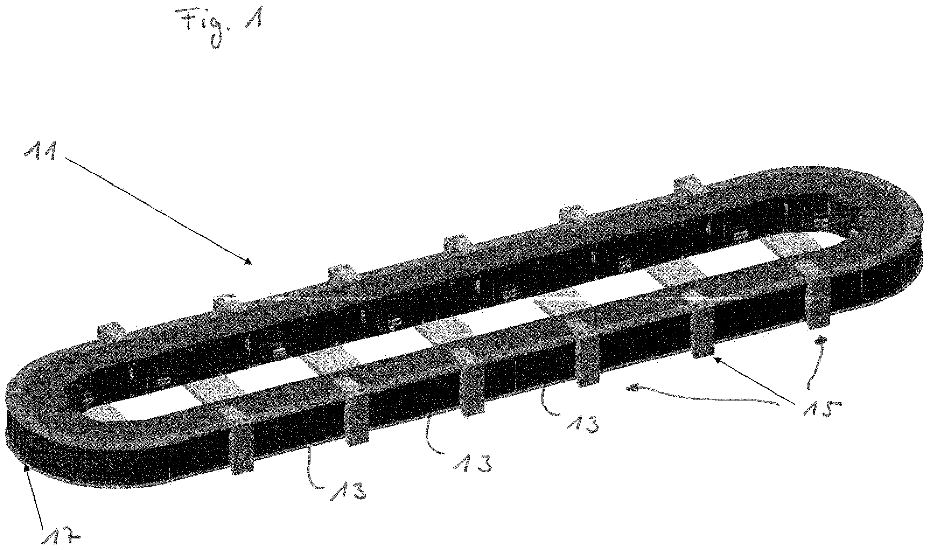

Ein Transportsystem 11, das als Linearmotor- oder Multi-Carrier-System ausgebildet ist, ist in Fig. 1 dargestellt. Das Transportsystem 11 umfasst mehrere Linearmotoren 13, die aneinandergereiht angeordnet sind, so dass sich eine durchgehende Führungsbahn ergibt. Ferner umfasst das Transportsystem 11 mehrere Läufer oder Transportelemente 15, die mittels der Linearmotoren 13 entlang der Führungsbahn bewegt werden können. Außerdem ist eine Führung 17 an den Linearmotoren 13 vorgesehen, um die Transportelemente 15 entlang der Führungsbahn zu leiten.

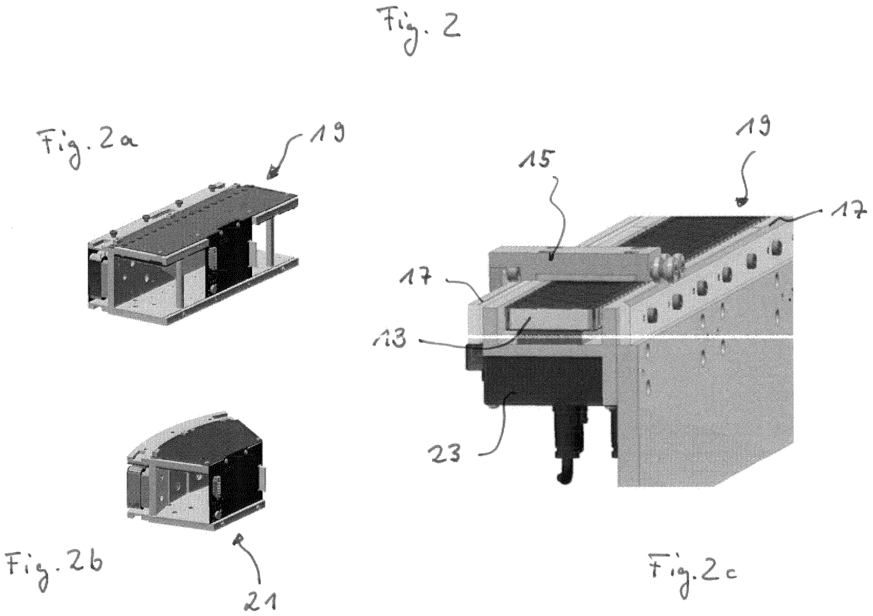

In Fig. 2 ist eine Detailansicht verschiedener Segmente des Transportsystems 11 dargestellt. Fig. 2a zeigt ein Segment 19 für gerade Strecke, während Fig. 2b ein Kurvensegment 21 zeigt. In Fig. 2c ist wiederum ein Segment 19 für gerade Strecke zusammen mit einem Läufer 15 und einem integrierten Antrieb 23 (z.B. Leistungselektronik) dargestellt. Das Segment 19 für gerade Strecke umfasst neben den Führungen 17 einen Linearmotor 13, der zum Antrieb des Transportelements 15 vorgesehen ist und mittels des integrierten Antriebs 23 gesteuert wird. Es ist zu beachten, dass die Darstellung der Fig. 2c im Vergleich zu Fig. 1 oder den Fig. 2a und 2b um 90° im Uhrzeigersinn gedreht ist.

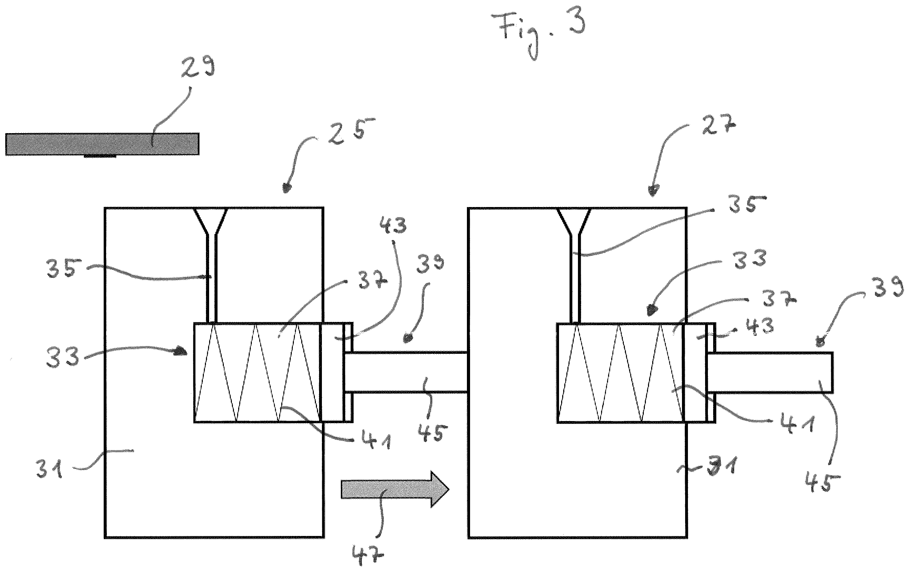

In Fig. 3 bis 8 sind ein erstes Transportelement 25 und ein zweites Transportelement 27 des Transportsystems 11 schematisch dargestellt. Ferner zeigen Fig. 3 bis 8 die Schritte des Verfahrens zum Befestigen eines Gegenstands 29 an dem ersten Transportelement 25 des Transportsystems 11.

Fig. 3 zeigt das erste Transportelement 25 und das zweite Transportelement 27 sowie den Gegenstand 29 vor dessen Befestigung am ersten Transportelement 25. Die Transportelemente 25, 27 sind baugleich ausgebildet und weisen jeweils einen Körper 31 auf, in welchem ein Hohlraum 33 ausgebildet ist. Der Hohlraum 33 umfasst einen Kanal 35 und einen Abschnitt, der sich in einem Arbeitsraum 37 innerhalb des Körpers 31 befindet.

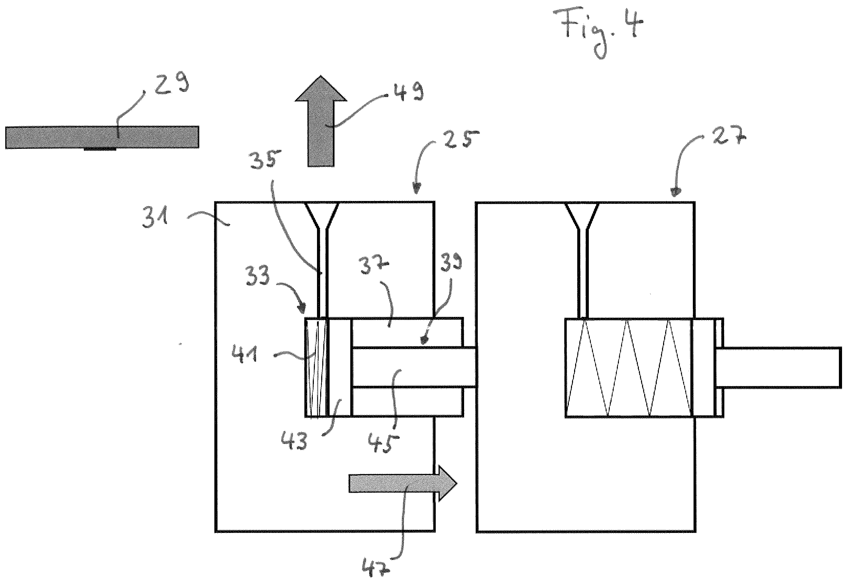

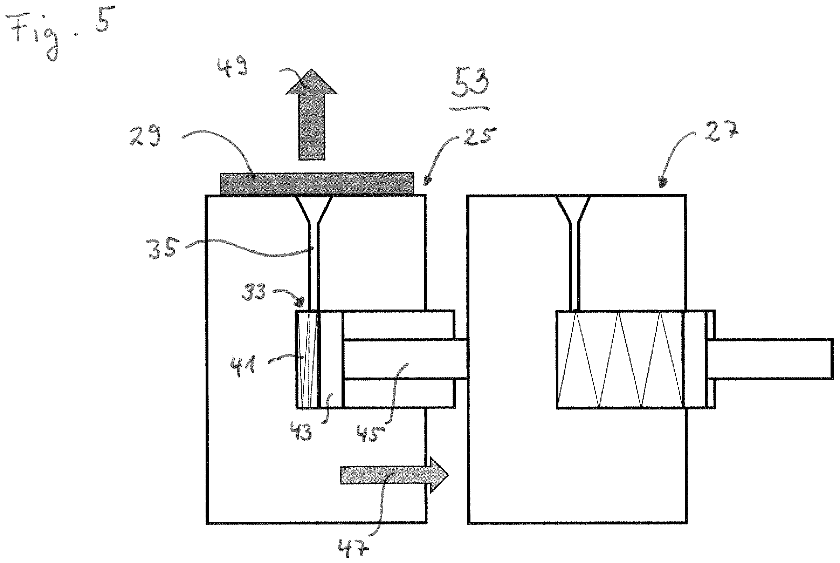

In dem Arbeitsraum 37 sind ein Betätigungselement, das als Stößel 39 ausgebildet ist, und ein Energiespeicherelement angeordnet, das als Feder 41 ausgebildet ist. Der Stößel 39 umfasst ferner einen Kolben 43, der mit der Feder 41 mechanisch verbunden ist, und einen Schaft 45. In der Darstellung von Fig. 3 und Fig. 6 bis 8 befindet sich der Stößel 39 in einer ausgefahrenen Position, während sich der Stößel 39 in der Darstellung von Fig. 4 und 5 in einem zurückgezogenen Zustand befindet, der nachstehend näher erläutert wird.

In dem in Fig. 3 dargestellten Zustand liegt der Schaft 45 des Stößels 39 an dem zweiten Transportelement 27 an. Bei einer weiteren Bewegung des ersten Transportelements 25 in Richtung des zweiten Transportelements 27 übt der Schaft 45 eine Anpresskraft 47 auf das zweite Transportelement 27 aus. Wenn die Geschwindigkeit des zweiten Transportelements 27 geringer als die Geschwindigkeit des ersten Transportelements 25 ist, was insbesondere dann der Fall ist, wenn sich das zweite Transportelement 27 im Stillstand befindet, übt das zweite Transportelement 27 eine Reaktionskraft auf den Schaft 45 und damit auf den Stößel 39 als Betätigungselement des ersten Transportelements 25 auf. Das zweite Transportelement 27 wirkt somit als Aktivierungselement für den Stößel 39 des ersten Transportelements 25, der wiederum als Betätigungselement für die Feder 41 wirkt.

Wenn sich der Abstand zwischen dem ersten Transportelement 25 und dem zweiten Transportelement 27 aufgrund der geringeren Geschwindigkeit des zweiten Transportelements 27 weiter verkleinert, geht der Stößel 39 vom ausgefahrenen Zustand (Fig. 3) in den zurückgezogenen Zustand (Fig. 4) über, und daher wird die Feder 41 mittels des Stößels 39 als Betätigungselement zusammengepresst, wie dies in Fig. 4 und 5 dargestellt ist. Dadurch wird Energie in der Feder 41 gespeichert, so dass diese als Energiespeicherelement wirkt. Außerdem wird das Volumen des Hohlraums 33 innerhalb des Arbeitsraums 37 verkleinert, wenn sich der Stößel 39 in das erste Transportelement 25 hineinbewegt. Die Luft, die sich in dem in Fig. 3 dargestellten Zustand im Hohlraum 33 innerhalb des Arbeitsraums 37 befindet, wird durch die Verkleinerung des Hohlraums 33 über den Kanal 35 aus dem ersten Transportelement 25 ausgestoßen. Der Pfeil 49 stellt die Luft dar, die aus dem ersten Transportelement 25 ausgestoßen wird.

Anschließend wird der Gegenstand 29 an dem ersten Transportelement 25 angebracht, indem dieser derart auf die Oberseite des ersten Transportelements 25 gelegt wird, dass der Kanal 35 des Hohlraums 33 im ersten Transportelement 25 bezüglich des Außenraums 53 des ersten Transportelements 25 luftdicht verschlossen ist.

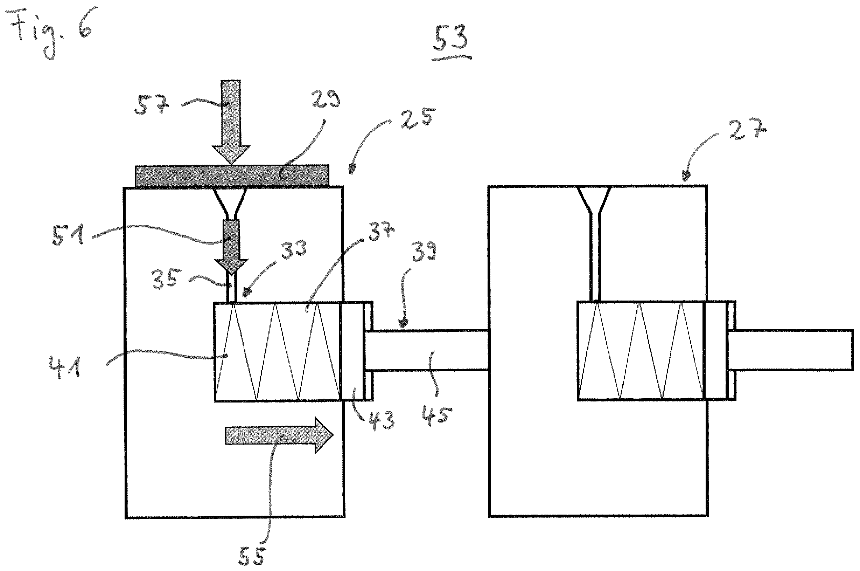

Der relative Abstand zwischen dem ersten Transportelement 25 und dem zweiten Transportelement 27 wird anschließend wieder vergrößert, wie dies in Fig. 6 dargestellt ist. Das erste Transportelement 25 kann zu diesem Zweck beispielsweise mittels eines entsprechenden, in Fig. 1 dargestellten Linearmotors 13 in der Darstellung von Fig. 6 nach links bewegt werden. Dadurch entspannt sich die Feder 41, die als Rückstellelement für den Stößel 39 wirkt und diesen von der zurückgezogenen Position (Fig. 5) in die ausgefahrene Position (Fig. 6) zurückstellt.

Wenn sich die Feder 41 aufgrund der Vergrößerung des Abstands zwischen den zwei Transportelementen 25, 27 entspannt, wird somit die in der Feder 41 gespeicherte Energie wieder abgegeben. Mittels der von der Feder 41 abgegebenen Energie wird jedoch nur teilweise eine Rückstellkraft 55 für den Stößel 39 erzeugt. Mittels eines weiteren Teils der von der Feder 41 abgegebenen Energie wird Luft aus dem Kanal 35 in den Arbeitsraum 37 angesaugt, wie dies durch den Pfeil 51 in Fig. 6 dargestellt ist, da sich der Abschnitt des Hohlraums 33 innerhalb des Arbeitsraums 37 aufgrund des Zurückstellens des Stößels 39 in die ausgefahrene Position wieder vergrößert und das obere Ende des Kanals 35 mittels des Gegenstands 29 verschlossen ist.

Mittels der von der Feder 41 abgegebenen Energie wird somit einerseits die Rückstellkraft 55 auf den Stößel 39 ausgeübt, und andererseits wird im Hohlraum 33 aufgrund des sich vergrößernden Volumens des Hohlraums 33 ein Unterdruck erzeugt, da sich das aus dem Kanal 35 in den Arbeitsraum 37 austretende Gas entspannt und der Hohlraum 33 gegenüber dem Außenraum 53 verschlossen ist. Da das Volumen des Hohlraums 33 bei konstanter Teilchenzahl des Gases in diesem größer wird, sinkt der Druck im Hohlraum 33.

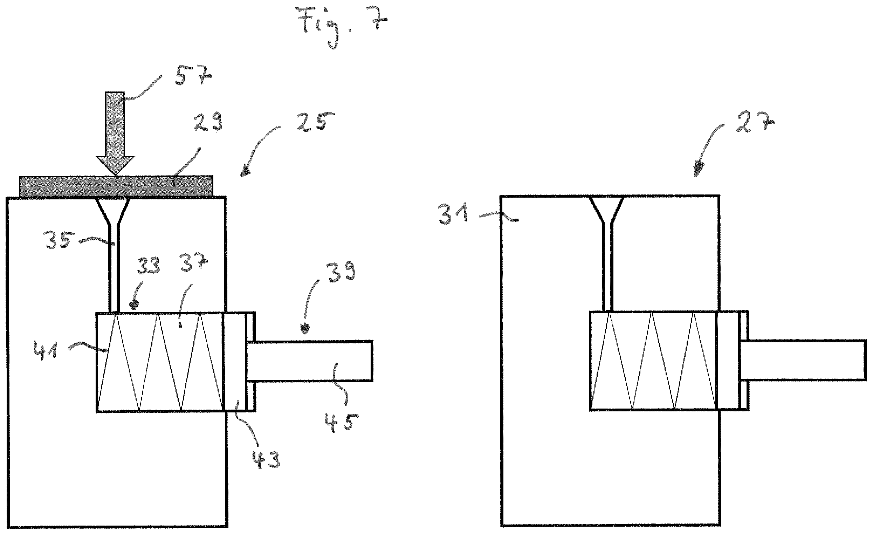

Die Vergrößerung des Abstands zwischen dem ersten Transportelement 25 und dem zweiten Transportelement 27 führt somit insgesamt zu einer Druckdifferenz zwischen dem Hohlraum 33 im Inneren des ersten Transportelements 25 und dem Außenraum 53 (d.h. der Umgebung). Aufgrund dieser Druckdifferenz wirkt eine Kraft auf den Gegenstand 29, d.h. eine Haltekraft 57, die durch einen entsprechenden Pfeil dargestellt ist und den Gegenstand 29 an einer Außenseite des ersten Transportelements 25 fixiert. Wenn der Abstand zwischen dem ersten und dem zweiten Transportelement 25, 27 weiter vergrößert wird, wie dies in Fig. 7 dargestellt ist, berührt der Stößel 39 des ersten Transportelements 25 den Körper 31 des zweiten Transportelements 27 nicht mehr. Der Unterdruck im Inneren des Hohlraums 33 im ersten Transportelement 25 bleibt jedoch bestehen. Dadurch wirkt die Haltekraft 57 weiterhin auf den Gegenstand 29, der folglich am ersten Transportelement 25 befestigt ist.

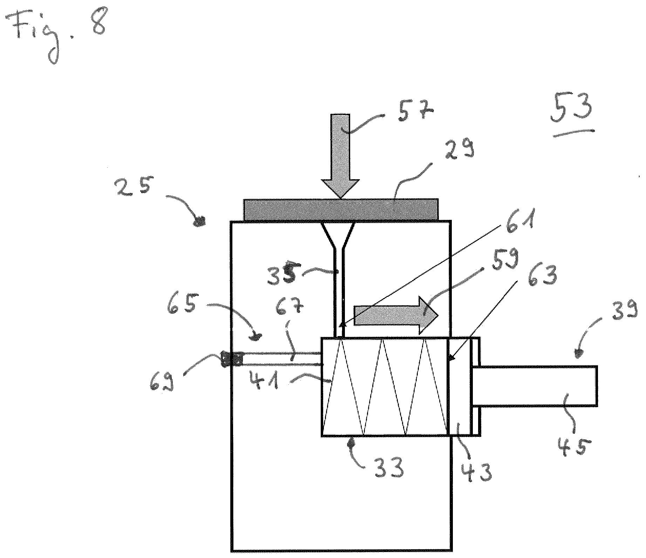

Die Größe der Haltekraft 57 kann im Verhältnis zu einer Federkraft 59 (vgl. Fig. 8) abgeschätzt werden, wenn man davon ausgeht, dass der Unterdruck in dem Hohlraum 33 des ersten Transportelements 25 bei der Entspannung der Feder 41 durch diese Federkraft 59 erzeugt wird. Da im Hohlraum 33 überall der gleiche Unterdruck herrscht, sobald der Hohlraum 33 gegenüber dem Außenraum 53 verschlossen ist, ist das Verhältnis der Haltekraft 57 zur Federkraft 59 proportional zum Verhältnis der Querschnittsfläche des Kanals 35 zur Querschnittsfläche des Kolbens 43 bzw. proportional zum Quadrat der entsprechenden Durchmesser des Kanals 35 bzw. des Kolbens 43. Daher gilt:

$$F_H/(d_{Kanal})^2 = F_{Feder}/(d_{Kolben})^2 \qquad \text{bzw.} \qquad F_H = F_{Feder} * (d_{Kanal}/d_{Kolben})^2.$$

Dabei sind $F_H$ die Haltekraft 57, $F_{Feder}$ die Federkraft 59, $d_{Kanal}$ der Durchmesser 61 des Kanals 35 (vgl. Fig. 8) und $d_{Kolben}$ der Durchmesser 63 des Kolbens 43. Wenn der Durchmesser 61 des Kanals 35 beispielsweise 10 mm beträgt und der Durchmesser 63 des Kolbens 43 beispielsweise 20 mm, ergibt sich bei einer Federkraft 59 von 10 N eine Haltekraft 57 von 2,5 N. Mit einer solchen Anordnung ist es daher möglich, die Trägheitskräfte eines Gegenstands 29 mit etwa 250 g Gewicht zu kompensieren bzw. einen Gegenstand 29 mit einem solchen Gewicht an dem ersten Transportelement 25 zu fixieren.

Die Haltekraft 57 kann wieder aufgehoben werden, indem wieder die in Fig. 5 gezeigte Position der Transportelemente 25, 27 eingenommen wird. Dann kann der Gegenstand 29 ohne großen Kraftaufwand wieder entfernt werden.

Das erste Transportelement 25 weist gemäß Fig. 8 zusätzlich ein Freigabeelement 65 auf, das als alternative Möglichkeit dafür vorgesehen ist, das Ablösen des Gegenstands 29 von dem ersten Transportelement 25 zu ermöglichen, nachdem dieser am ersten Transportelement 25 fixiert wurde. Das Freigabeelement 65 umfasst eine Belüftungsleitung 67 und einen Verschluss 69. Wenn der Verschluss 69 entweder durch eine Ansteuerung oder manuell geöffnet wird, wird der Hohlraum 33 im Innern des ersten Transportelements 25 belüftet, so dass anschließend kein Unterdruck im Hohlraum 33 mehr vorhanden ist. Dadurch verschwindet die Haltekraft 57, so dass der Gegenstand 29 nicht mehr an dem ersten Transportelement 25 fixiert ist und entfernt werden kann.

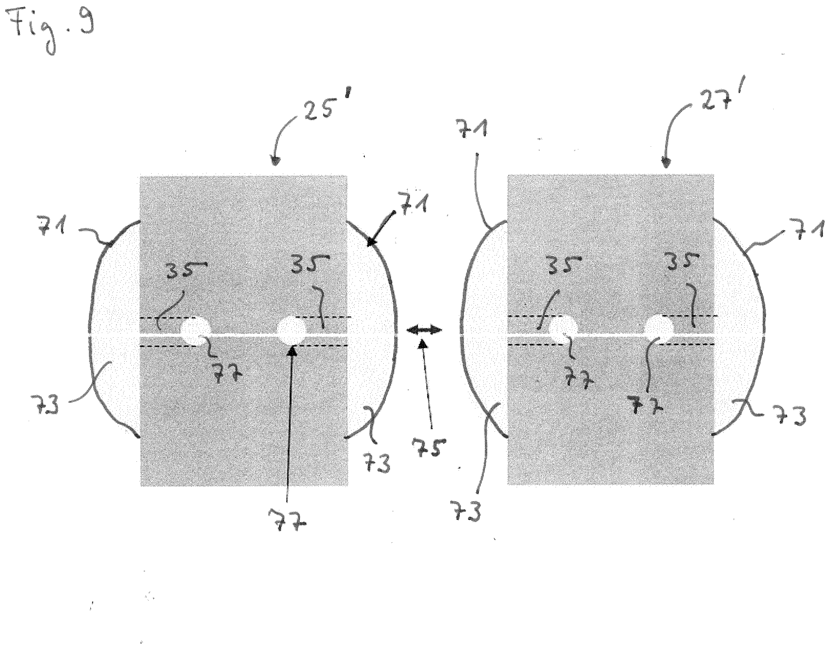

In Fig. 9 ist ein alternatives Beispiel zweier Transportelemente 25', 27' in einer Draufsicht bzw. Ansicht von oben dargestellt. Anstelle eines Stößels 39 (vgl. Fig. 3 bis 8) weisen diese Transportelemente 25', 27' jeweils auf beiden Seiten eine flexible Außenfläche 71 auf, innerhalb derer sich ein komprimierbares Luftvolumen 73 befindet.

Wenn die beiden Transportelemente 25', 27' gegeneinander bewegt werden, so dass der Abstand zwischen diesen ausreichend verringert wird, wirkt eine Kompressionskraft 75 auf die jeweiligen Luftvolumina 73. Die flexiblen Außenflächen 71 der Transportelemente 25', 27' wirken somit als Betätigungselement und auch als Energiespeicherelement, wenn sie bei einer Bewegung der Transportelemente 25, 27 gegeneinander bewegt und verformt werden. Dabei wird das komprimierbare Luftvolumen 73 verkleinert, und es tritt Luft aus dem komprimierbaren Luftvolumen 73 über den Kanal 35 aus einer Auslassöffnung 77 des Kanals 35 aus.

In ähnlicher Weise wie in Fig. 5 wird anschließend ein Gegenstand 29 (in Fig. 9 nicht gezeigt) an der Außenseite eines der Transportelemente 25', 27' (oder jeweils an der Außenseite beider Transportelemente 25', 27') angeordnet, so dass die Auslassöffnungen 77 verschlossen werden. Wenn der Abstand zwischen dem ersten und zweiten Transportelement 25', 27' anschließend wieder vergrößert wird, entspannt sich die flexible Außenfläche 71 auf ähnliche Weise, wie dies für die Feder 41 in Fig. 6 dargestellt ist. Dadurch entsteht wiederum ein Unterdruck im Hohlraum 33 im Innern des ersten bzw. zweiten Transportelements 25', 27', so dass wiederum eine Haltekraft 57 auf den Gegenstand 29 ausgeübt wird.

Ein Vorteil des in Fig. 9 dargestellten Beispiels besteht darin, dass jeweils eine flexible Außenfläche 71 auf beiden Seiten der Transportelemente 25', 27' angeordnet ist. Dadurch ist die Erzeugung des Unterdrucks im Hohlraum 33 der Transportelemente 25', 27' und damit die Erzeugung der Haltekraft 57 für den Gegenstand 29 unabhängig von der relativen Anordnung der Transportelemente 25', 27' relativ zueinander. Mit anderen Worten kann sich eines der Transportelemente 25', 27' nicht auf der "falschen Seite" des jeweils anderen Transportelements 25', 27' befinden, um die Erzeugung des Unterdrucks im jeweiligen Transportelement 25', 27' und der Haltekraft 57 auszulösen. Die Transportelemente 25', 27' wirken somit stets auch als Aktivierungselement für das jeweils andere Transportelement 25', 27'.

Bezugszeichenliste

| 11 | Transportsystem |
| 13 | Linearmotor |
| 15 | Läufer, Transportelement |
| 17 | Führung |
| 19 | Segment für gerade Strecke |
| 21 | Kurvensegment |
| 23 | integrierter Antrieb |
| 25, 25' | erstes Transportelement |
| 27, 27' | zweites Transportelement |
| 29 | Gegenstand |
| 31 | Körper |
| 33 | Hohlraum |
| 35 | Kanal |
| 37 | Arbeitsraum |
| 39 | Stößel, Betätigungselement |
| 41 | Feder |
| 43 | Kolben |
| 45 | Schaft |
| 47 | Anpresskraft |
| 49 | Pfeil für Kraftwirkung |
| 51 | Pfeil für Kraftwirkung |
| 53 | Außenraum |
| 55 | Rückstellkraft |
| 57 | Haltekraft |
| 59 | Federkraft |
| 61 | Durchmesser des Kanals |
| 63 | Durchmesser der Kolbens |
| 65 | Freigabeelement |
| 67 | Belüftungsleitung |
| 69 | Verschluss |
| 71 | flexible Außenfläche |
| 73 | komprimierbares Luftvolumen |
| 75 | Kompressionskraft |
| 77 | Auslassöffnung |

# EP 3 653 551 B1

## Patentansprüche

**1.** Linearmotorsystem, das zum Transportieren eines Gegenstands vorgesehen ist, mit einem ersten Transportelement, das als ein Läufer des Linearmotorsystems ausgebildet ist, und zumindest einem Aktivierungselement, wobei das erste Transportelement umfasst:

ein erstes Betätigungselement, und
ein Energiespeicherelement, das mit dem ersten Betätigungselement gekoppelt und ausgebildet ist, um bei Betätigung des ersten Betätigungselements Energie zu speichern,
wobei das Aktivierungselement ausgebildet ist, um eine Betätigung des ersten Betätigungselements auszulösen, und
wobei das erste Transportelement ausgebildet ist, um mittels der Energie des Energiespeicherelements eine Haltekraft auf den zu transportierenden Gegenstand auszuüben oder aufzubauen, und
wobei das erste Betätigungselement durch die Bewegung des ersten Transportelements betätigbar ist,
**dadurch gekennzeichnet, dass**
sich das erste Betätigungselement senkrecht zu einer Bewegungsrichtung des ersten Transportelements von dem ersten Transportelement weg erstreckt und
das Aktivierungselement senkrecht zu der Bewegungsrichtung des ersten Transportelements beabstandet und bezogen auf die Bewegungsrichtung des ersten Transportelements seitlich angeordnet ist, so dass das erste Transportelement entlang einer Führungsbahn an dem Aktivierungselement vorbei bewegbar ist, ohne dass die Bewegung des ersten Transportelements durch das Aktivierungselement behindert wird.

**2.** Verfahren zum Befestigen eines Gegenstands an einem ersten Transportelement eines Linearmotorsystems, insbesondere nach Anspruch 1, wobei das Verfahren umfasst, dass:

ein erstes Betätigungselement des ersten Transportelements derart betätigt wird, dass ein Energiespeicherelement des ersten Transportelements Energie speichert,
der zu transportierende Gegenstand an dem ersten Transportelement angeordnet wird und
mittels der Energie des Energiespeicherelement eine Haltekraft auf den zu transportierenden Gegenstand ausgeübt oder aufgebaut wird
wobei das erste Betätigungselement durch die Bewegung des ersten Transportelements betätigt wird,
**dadurch gekennzeichnet, dass**
sich das erste Betätigungselement senkrecht zu einer Bewegungsrichtung des ersten Transportelements von dem Transportelement weg erstreckt und
ein Aktivierungselement, das entlang einer Senkrechten zu einer Bewegungsrichtung des ersten Transportelements beabstandet und bezogen auf die Bewegungsrichtung des ersten Transportelements seitlich angeordnet ist, eine Betätigung des ersten Betätigungselements auslöst, wobei das erste Transportelement entlang einer Führungsbahn an dem Aktivierungselement vorbei bewegt wird, ohne dass die Bewegung des ersten Transportelements durch das Aktivierungselement behindert wird.

## Claims

**1.** A linear motor system, which is provided for transporting an object, comprising a first transport element, which is configured as a carrier of the linear motor system, and at least one activation element, wherein the first transport element comprises:

a first actuation element, and
an energy storage element which is coupled to the first actuation element and which is configured to store energy when the first actuation element is actuated,
wherein the activation element is configured to trigger an actuation of the first actuation element, and
wherein the first transport element is configured to exert or build up a holding force on the object to be transported by means of the energy of the energy storage element, and
wherein the first actuation element can be actuated by the movement of the first transport element,
**characterized in that**
the first actuation element extends perpendicular to a direction of movement of the first transport element away from the first transport element, and
the activation element is arranged at a distance perpendicular to the direction of movement of the first transport element and is arranged laterally with respect to the direction of movement of the first transport element so that the first transport element can be moved along a guide path past the activation element without the movement of the first transport element being impeded by the activation element.

2. A method for fastening an object to a first transport element of a linear motor system, in particular according to claim 1,

wherein the method comprises that:

a first actuation element of the first transport element is actuated such that an energy storage element of the first transport element stores energy,
the object to be transported is arranged at the first transport element and
a holding force is exerted or built up on the object to be transported by means of the energy of the energy storage element,
wherein the first actuation element is actuated by the movement of the first transport element,

**characterized in that**

the first actuation element extends perpendicular to a direction of movement of the first transport element away from the transport element, and
an activation element, which is spaced apart along a perpendicular to a direction of movement of the first transport element and which is arranged laterally with respect to the direction of movement of the first transport element, triggers an actuation of the first actuation element, wherein the first transport element is moved along a guide path past the activation element without the movement of the first transport element being impeded by the activation element.

**Revendications**

1. Système de moteur linéaire prévu pour transporter un objet, comprenant un premier élément de transport conçu comme un curseur du système de moteur linéaire, et au moins un élément d'activation, le premier élément de transport comprenant :

un premier élément d'actionnement, et
un élément de stockage d'énergie couplé au premier élément d'actionnement et conçu pour stocker de l'énergie lors de l'actionnement du premier élément d'actionnement,
l'élément d'activation étant conçu pour déclencher un actionnement du premier élément d'actionnement, et
le premier élément de transport étant conçu pour exercer ou générer une force de maintien sur l'objet à transporter grâce à l'énergie stockée dans l'élément de stockage d'énergie, et
le premier élément d'actionnement pouvant être actionné par le mouvement du premier élément de transport,
**caractérisé en ce que**
le premier élément d'actionnement s'étend à partir du premier élément de transport perpendiculairement à une direction de mouvement du premier élément de transport, et
l'élément d'activation est disposé à distance perpendiculairement à la direction de mouvement du premier élément de transport et latéralement par rapport à la direction de mouvement du premier élément de transport, de sorte que le premier élément de transport peut passer devant l'élément d'activation le long d'une voie de guidage, sans que le mouvement du premier élément de transport soit entravé par l'élément d'activation.

2. Procédé de fixation d'un objet à un premier élément de transport d'un système de moteur linéaire, en particulier selon la revendication 1, le procédé consistant à :

actionner un premier élément d'actionnement du premier élément de transport de manière à stocker de l'énergie dans un élément de stockage d'énergie du premier élément de transport,
positionner l'objet à transporter sur le premier élément de transport, et
exercer ou générer une force de maintien sur l'objet à transporter grâce à l'énergie stockée dans l'élément de stockage d'énergie,
le premier élément d'actionnement étant être actionné par le mouvement du premier élément de transport,
**caractérisé en ce que**
le premier élément d'actionnement s'étend à partir du premier élément de transport perpendiculairement à une direction de mouvement du premier élément de transport, et

un élément d'activation qui est disposé à distance le long d'une perpendiculaire à une direction de mouvement du premier élément de transport et latéralement par rapport à la direction de mouvement du premier élément de transport déclenche un actionnement du premier élément d'actionnement, de sorte que le premier élément de transport passe devant l'élément d'activation le long d'une voie de guidage, sans que le mouvement du premier élément de transport soit entravé par l'élément d'activation.

Fig. 1

Fig. 2

Fig. 2a

Fig. 2b

Fig. 2c

EP 3 653 551 B1

Fig. 3

Fig. 4

Fig. 5

Fig. 6

Fig. 7

EP 3 653 551 B1

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013202674 A1
- JP S63154462 A
- EP 1892204 A1